# EUROPEAN PATENT SPECIFICATION

(11) **EP 4 535 277 B1**
(45) Date of publication and mention of the grant of the patent: **17.12.2025**
(21) Application number: 23201383.9
(22) Date of filing: 03.10.2023
(51) Int. Cl.: G06T 1/20, H04N 19/436

(54) **DISTRIBUTING LOAD IN A MULTI-CHIP IMAGE PROCESSING UNIT FOR PROCESSING IMAGE DATA INTO PROCESSED IMAGE DATA**
LASTVERTEILUNG IN EINER MEHRCHIP-BILDVERARBEITUNGSEINHEIT ZUR VERARBEITUNG VON BILDDATEN IN VERARBEITETE BILDDATEN
DISTRIBUTION DE CHARGE DANS UNE UNITÉ DE TRAITEMENT D'IMAGE MULTIPUCE POUR TRAITER DES DONNÉES D'IMAGE EN DONNÉES D'IMAGE TRAITÉES

(43) Date of publication of application: 09.04.2025
(73) Proprietor: Axis AB, 223 69 Lund (SE)
(72) Inventor: Yuan, Song, 223 69 Lund (SE); Ericson, Joakim, 223 69 Lund (SE)
(74) Representative: AWA Sweden AB

(56) References cited:
- JP-A- 2006 229 749
- US-A1- 2018 143 646
- US-B1- 7 598 958

## Description

### Technical Field

The present invention relates generally to the field of image processing systems, and more particularly, to systems, methods, and non-transitory computer-readable media for distributing processing of image data between a first chip and a second chip such that the estimated use of memory bandwidth is distributed evenly between the first and the second chip.

### Background

Over recent years, there has been an uptick in the market's demand for high-resolution single view, multi-directional and panorama cameras. This surge in interest may be attributed to various factors including the push for advanced monitoring systems, the rise of virtual and augmented reality applications, and evolving photography techniques that prioritize immersive and detailed visuals. Such high-resolution cameras can capture images dense with pixels, preserving intricate details. This enhanced clarity not only makes images more visually appealing, but it may also allow for improved post-processing capabilities, such as zooming in without a significant loss in quality.

In response to this demand, the technology behind these cameras has evolved, leading to the development of multi-chip setups. Within these setups, each chip functions in tandem with its associated sensors, managing a range of image processing tasks, from image analysis and noise filtering to operations involving artificial intelligence and encoding. Such decentralized process where each chip operates with its localized sensors allows for optimized performance. However, this comes with challenges. Image processing tasks may be memory-intensive, demanding high memory bandwidth. Such requirements may present a bottleneck, limiting the pixel throughput, and subsequently defining the upper limits of the product capabilities.

There is thus a need for improvements in this context.

US 7598958 B1 (NVIDIA Corporation) discloses multi-chip graphics system includes a master chip and a slave chip coupled by an interlink. The slave chip performs a graphics processing operation in parallel with the master chip.

US 2018/0143646 A1 (ELECTRONICS AND TELECOMMUNICATIONS RESEARCH INSTITUTE) discloses an object recognition device, an autonomous driving system including the same, and an object recognition method using the object recognition device. The object recognition device includes an object frame information generation unit, a frame analysis unit, an object priority calculator, a frame complexity calculator, and a mode control unit.

JP 2006 229749 A (SHARP KK) relates to an image processing apparatus and an image processing method capable of reducing image noise while preventing image blur.

### Summary

The invention is set out in the appended claims.

According to a first aspect of the present disclosure, there is provided a method of distributing load in a multi-chip image processing unit for processing image data into processed image data, as provided in claim 1.

The first algorithm, performing a set number of operations for a given size of input data, is thus content-agnostic, meaning that the time it takes to process input data with the first algorithm to output the at least one characteristic is not influenced by the specifics of the input data, only the size of the input data. The algorithmic complexity of the first algorithm thus remains consistent for the same size of input data, irrespective of the specific content of the input data. Put differently, the first algorithm has a deterministic time complexity in the sense that the first algorithm will always perform a set number of operations for a given size of input data. The nature of the operations performed by the first algorithm thus does not change based on the specific content of the input data.

Image data processing operations, ranging from encoding to object tracking, often have varying computational and memory demands based on the content of the image data. For instance, encoding simple patterns may require less memory bandwidth than intricate details, while dynamic scenes in an object tracking scenario might necessitate keeping a larger buffer of reference images in memory compared to static ones. Essentially, while the core algorithms remain consistent, the actual resource requirements, both in terms of computation and memory bandwidth, can fluctuate widely depending on specific image characteristics and the nature of the processing task.

In the context of a multi-chip image processing unit, the varying memory bandwidth requirement may result in that one of the first and second chip (the chip processing the part of the image data which requires the highest memory bandwidth) limits the pixel throughput, and subsequently defining the upper limits of the product capabilities.

The inventors have realized that by implementing a content-agnostic algorithm early in an image processing pipeline, prior to executing processing tasks on the initial image data that might demand significant memory bandwidth, distribution of the first image data between the first and second chip may be improved. Since the first algorithm is content-agnostic, the time it takes to determine the at least one characteristic of the first image data (that can be used to estimate use of memory bandwidth) does not depend on the content of the first image data. This in turn means that the time complexity of the first algorithm can be calculated in advance, aiding in the design of the multi-chip image processing unit to better align with its capability requirements.

The at least one characteristic outputted by the first algorithm is thus used to estimate use of memory bandwidth in the first and second chip. For example, the first algorithm may be applied separately on a plurality of portions of the first image data to determine the at least one characteristic separately for each of the plurality of portions, to estimate the use of memory bandwidth for each of the portions. In other embodiments, the first algorithm is applied to the complete image data at once and be configured to output at least one characteristic for separate portions of the input image data. Consequently, the estimated memory bandwidth for a chip processing one or more of the portions of the first image data may be calculated.

The first and second chip is connected to each other via the inter-chip connection. An example of such connection is PCI-e (Peripheral Component Interconnect Express). Other suitable connections may be used, for example Thunderbolt, HyperTransport, etc. Such a connection may advantageously be used to distribute processing of the first image data, for example by transmitting parts of the first image data which is accessible by the first chip from the first chip to the second chip in case the estimated memory bandwidth of processing the image data accessible at the first chip is deemed to high (e.g., exceeding a memory bandwidth threshold of the first chip).

The first and second chip may each be an Application-Specific Integrated Circuit (ASICs), a Field-Programmable Gate Arrays (FPGAs), a Complex Programmable Logic Devices (CPLDs), a General-Purpose Processors (GPPs), or any other suitable computer chip. In some cases, each chip is provided on a System on a chip (SoC). In some cases, the first and second chip is provided on a single SoC. Each chip may have access to a memory used for temporarily storing data during the processing performed by the chip. The memory may for example be a Static Random Access Memory, SRAM or a Dynamic Random Access Memory, DRAM.

The first algorithm is implemented in each of the first and second chip, wherein the step of analysing the first image data using the first algorithm comprises analysing a first portion of the first image data using the first chip and analysing a second, separate, portion of the first image data using the second chip. For example, it may be preconfigured that a first portion of the first image data is transmitted from the at least one sensor to the first chip for initial analysis (using the first algorithm) and that the rest of the first image data is transmitted to the second chip for the initial analysis. Such design may advantageously provide a low complexity setup of a system for processing image data input processed image data, in that transmission of image data from the at least one sensor to the multi-chip image processing unit may be hardcoded (in software and/or hardware). Since the first algorithm is content-agnostic, any change in complexity, or content of the first image data does not result in an increased load on the corresponding chip for determining the at least one characteristic of the first image data.

In examples, the first portion and the second portion have a same size. Advantageously, this may provide a low complexity design of the multi-chip processing unit.

The at least one sensor comprises a first sensor and a second sensor, wherein the first portion of the first image data is captured by the first sensor and wherein the second portion of the first image data is captured by the second sensor. Advantageously, transmission of image data from the at least one sensor the first and second chip may be simplified, such that the first chip is connected to the first sensor and the second chip is connected to the second sensor. In other embodiments, the first and second chip is connected to a same sensor. In such embodiments, the first chip may receive a first portion (e.g., upper portion, left portion, etc.) of image data captured by the sensor, and the second chip may receive a second portion (e.g., lower portion, right portion, etc.) of image data captured by the sensor.

In some embodiments, the first algorithm comprises at least one of: a convolutional neural network, CNN, a histogram of oriented gradients, HOG, algorithm, a local binary pattern, LBP, algorithm, or a Haar Cascade algorithm. In essence, all these algorithms are content-agnostic because they apply a consistent set of operations or procedures to any input image, regardless of the specific content of that image. For example, a CNN processes input images using convolutional layers where each filter (or kernel) slides across the image, performing the same operation on every patch of the image. The behaviour of these filters is not dependent on the specific content of the image, but rather on their learned weights. Therefore, for a fixed architecture and set weights, a CNN will process all images in a consistent, content-agnostic manner. In another example, the HOG algorithm captures gradient information in an image, essentially detailing the direction and intensity of edges. For any given image, HOG computes the gradient histograms in a consistent way, irrespective of the image's specific content. The algorithms focus is on structural information and edge directions, and processes all images using the same steps. Any of these algorithms may output one or more characteristics that subsequently may be used to estimate memory bandwidth requirement for processing the first image data.

In examples, the at least one characteristic comprises at least one of: a motion measurement, an object count, object detections, object classifications, or image segments. For example, a CNN may be trained to output detected objects in image data, the detected object may in some examples be classified. A LPB algorithm may be used to detect image segments, etc. Such characteristic(s) may be used to estimate a memory bandwidth that may be required to process the image data to which the characteristic(s) correspond. For example, in an object tracking scenario, portions of image data including a vast number of objects may require more memory bandwidth when processing the portions of image data, compared to other portions which do not comprise as many objects. Noise filtering processing may require more memory bandwidth if the image data to be filtered comprises more motion or more objects compared to if it comprises less motion or less objects. The number of scene segments in image data may influence the bitrate when encoding the image data, which in turn may increase the memory bandwidth when encoding the image data.

In examples, the processing of the first image data into processed image data comprises at least one of: applying a temporal noise filter to the first image data, tracking of objects in the first image data, or encoding of the first image data. As described herein, memory bandwidth for performing such processing of image data may advantageously be estimated from output from content-agnostic algorithms, resulting in an improved distribution of load in a multi-chip image processing unit.

In some embodiments, the processing of the first image data into processed image data comprises encoding of the first image data, wherein the step of distributing processing of the first image data between the first and the second chip comprises distributing processing of a subset of the first image data to the first chip and distributing the remainder of the first image data to the second chip, wherein the method further comprises: encoding, by the first chip, the subset of the first image data of into first encoded data; encoding, by the second chip, the remainder of the first image data of into second encoded data; forming an encoded image, the encoded image comprising the first encoded data as a first tile or a first slice and the second encoded data as a second tile or a second slice. Advantageously, the concept of tiles/slices in, e.g., H.265 encoding may be used to produce a single encoded image from subsets of image data encoded by different chips, while at the same time distributing memory bandwidth between the chips to improve throughput.

In some embodiments, the step of forming the encoded image is implemented in the first chip, wherein the method further comprises: transmitting, by the second chip, the second encoded data to the first chip using the inter-chip connection. Advantageously, this may facilitate a simplified manufacturing process of the chips since the multiplexing/stitching functionality (combining the tiles/slices) resides on one of the chips. Moreover, implementing the stitching functionality on the same chip as performing encoding a subset of image data may make access to this encoded data easier. Furthermore, the inter-chip connection used for distribution of image data to be processed may be reused for transmission of encoded data, simplifying the design of the multi-chip image processing unit.

In some embodiments, the processing of the first image data into processed image data comprises applying a temporal noise filter, TNF, to the first image data, wherein the at least one characteristic determined for the first portion of the first image data indicates a first motion measurement, wherein the at least one characteristic determined for the second portion of the first image data indicates a second motion measurement, and wherein upon the first motion measurement being higher than the second motion measurement, the step of distributing processing of the first image data between the first and the second chip using the inter-chip connection comprises transmitting a sub-set of the first portion of the image data from the first chip to the second chip using the inter-chip connection. A motion blur resistant TNF may require more memory bandwidth for image data with more motion, Advantageously, the present embodiment may increase throughput in such a case, since some of the high motion image data is transmitted from the first chip to the second chip for processing, reducing memory bandwidth bottlenecks.

In some embodiments, the processing of image data into processed image data comprises tracking of objects in the image data, wherein the at least one characteristic determined for the first portion of the first image data indicates a first object count, wherein the at least one characteristic determined for the second portion of the first image data indicates a second object count, and wherein the first object count is higher than the second object count, wherein the step of distributing processing of the first image data between the first and the second chip using the inter-chip connection comprises transmitting a sub-set of the first portion of the first image data from the first chip to the second chip using the inter-chip connection. Dynamic scenes in an object tracking scenario might necessitate keeping a larger buffer of reference images in memory compared to static ones, thus requiring a higher memory bandwidth. In many cases, a scene captured by the first image data comprises more dynamic and less dynamic areas. This can be leveraged when balancing the load across the multi-chip image processing unit, by transmitting a sub-set of a portion of image data capturing a dynamic part of the scene to be processed by the chip that otherwise would only process image data capturing a lower dynamic part of the scene.

According to a second aspect of the invention, the above object is achieved by a non-transitory computer-readable storage medium having stored thereon instructions for implementing the method according to the first aspect when executed on a device having processing capabilities.

According to a third aspect of the invention, the above object is achieved by a system for distributing load in a multi-chip image processing unit for processing image data into processed image data, as provided in claim 11.

According to embodiments, the system is implemented in one of: a single-view camera, a multi-view camera or a panorama view camera, wherein the system comprises the at least one image sensor.

The second and third aspects may generally have the same features and advantages as the first aspect. It is further noted that the disclosure relates to all possible combinations of features unless explicitly stated otherwise.

### Brief Description of the Drawings

The above, as well as additional objects, features, and advantages of the present invention, will be better understood through the following illustrative and non-limiting detailed description of embodiments of the present disclosure, with reference to the appended drawings, where the same reference numerals will be used for similar elements, wherein:
Figure 1 shows a multi-chip image processing unit according to a first embodiment;
Figure 2 shows a multi-chip image processing unit according to a second embodiment;
Figure 3 shows a multi-chip image processing unit according to a third embodiment;
Figure 4 shows a system comprising a multi-view camera and a multi-chip image processing unit according to embodiments;
Figure 5 shows a system comprising a panorama view camera and a multi-chip image processing unit according to embodiments;
Figure 6 shows a system comprising a single view camera and a multi-chip image processing unit according to embodiments;
Figure 7 shows a method of distributing load in a multi-chip image processing unit according to embodiments.

### Detailed Description

Image data processing encompasses a wide array of operations, from encoding and compression to object tracking and noise filtering. Each of these operations interacts with image data in unique ways, and their computational and memory demands may vary significantly based on the content of the image. For instance, encoding an image with uniform colours and simple patterns might require less memory bandwidth compared to an image with complex, intricate details and rapidly changing colours. Object tracking provides another compelling example. In cases where image sequences or video feeds are processed, the number of reference images or frames that need to be kept in memory can differ depending on the content. A scene with consistent, slow-moving objects may only require a few reference frames. In contrast, a dynamic scene with fast and unpredictable object movements may necessitate a larger buffer of reference images to ensure accurate tracking. Such variations may significantly impact the memory bandwidth and storage requirements. Noise filtering is another operation where the demands can shift based on image content. Filtering images captured in low-light conditions with significant grain might be more resource-intensive than processing well-lit, high-quality images. In another example, noise filtering (i.e., temporal noise filtering) can leverage temporal information, meaning information from neighbouring frames, to reduce noise. In cases with high motion in the video, the alignment between frames can shift, making it challenging to straightforwardly use pixels from one frame to influence another. Algorithms might need to keep more frames in memory to account for this motion, leading to higher memory demands.

In essence, while the foundational algorithms such as those exemplified above and other image processing algorithms governing image data processing operations remain consistent, the real-world demand on resources, particularly memory bandwidth and storage, can fluctuate widely based on the specifics of the image content and the requirements of the processing task.

In a multi-chip image processing unit where each chip processes a distinct segment of an input image, disparities in memory bandwidth requirements for the individual image processing tasks can lead to throughput issues. If one chip requires significantly more memory bandwidth due to its specific task's complexity or the nature of its image segment, it can become a bottleneck, stalling the overall processing pipeline. As a result, other chips might be left idling or waiting for data, leading to inefficient resource utilization and compromised system throughput.

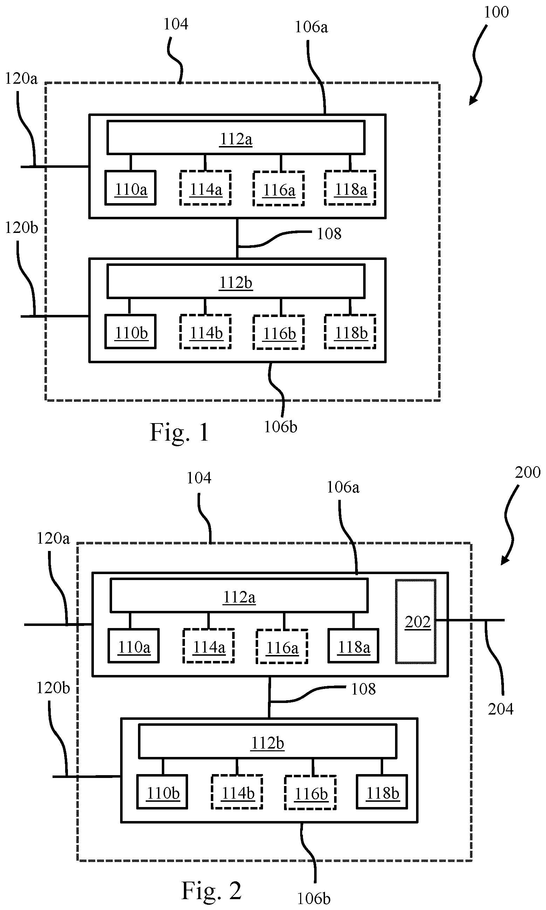

Methods, systems, and non-transitory computer-readable storage mediums for distributing use of memory bandwidth in a multi-chip image processing unit, the multi-chip image processing unit configured for processing image data into processed image data, will now be described in conjunction with figures 1-7.

Figure 1 shows a multi-chip image processing unit 104 according to a first embodiment. The multi-chip image processing unit 104 is configured to process image data into processed image data. The multi-chip processing unit 104 is part of a system 100 for distributing load in a multi-chip image processing unit.

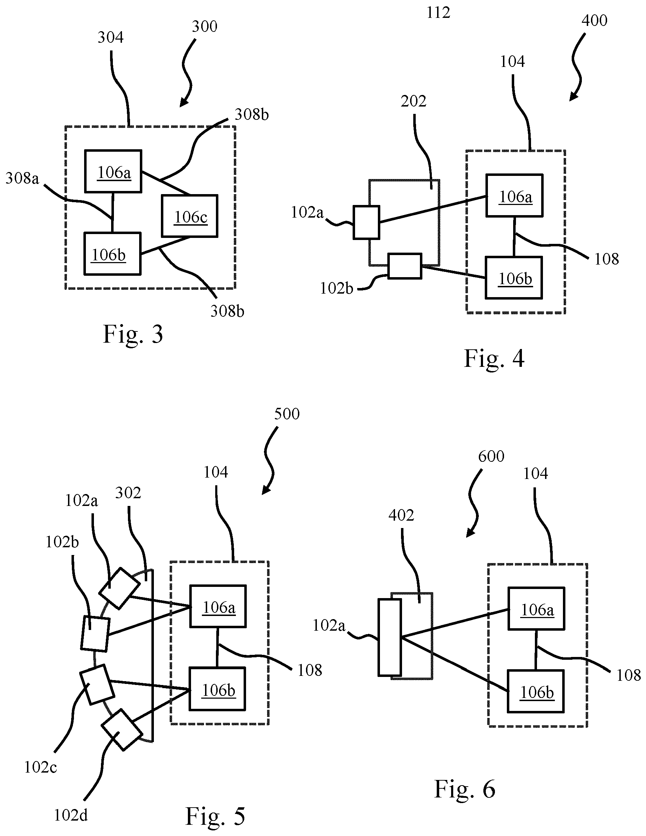

The multi-chip processing unit 104 comprises a first chip 106a and a second chip 106b. As will be exemplified in conjunction with figure 3, the multi-chip processing unit 104 may in some embodiments comprise more than two chips, for example three or four chips.

The multi-chip processing unit 104 is configured to receive first image data from at least one image sensor connected to the multi-chip processing unit 104. In some embodiments, the first chip 106a receives a first portion of the first image data, e.g., through a connection 120a with one or more of the at least one image sensors. In some embodiments, the second chip 106a receives a second, separate, portion of the first image data, e.g., through a connection 120b with one or more of the at least one image sensors. The first portion and the second portion of the first image data may in some embodiments have a same size. In other embodiments, the size may differ.

In some embodiments, the first 106a and second 106b chips implements the same functionality. In other embodiments, the first 106a and second 106b chips implements the different functionality. In figure 1, each of the first and second chips comprises a first component 110a, b which implements a first algorithm, the first algorithm configured to output at least one characteristic of the first image data. In the example of figure 1, the first algorithm of the first chip 106a outputs at least one characteristic of the first portion of the first image data received through the connection 120a, and the first algorithm of the second chip 106a outputs at least one characteristic of the second portion of the first image data received through the connection 120b.

In some embodiments, not shown in figure 1, the first algorithm is implemented in a component separate from the first 106a and second 106b chip.

The first algorithm is content-agnostic, as further described above, which means that it performs a set number of operations for a given size of image data input to the first algorithm. This means that the time it takes to process input data with the first algorithm to output the at least one characteristic is not influenced by the specifics of the input data, only the size of the input data. The first algorithm may comprise at least one of a convolutional neural network, CNN, a histogram of oriented gradients, HOG, algorithm, a local binary pattern, LBP, algorithm, or a Haar Cascade algorithm.

A CNN may for example be trained to output the at least one characteristic using training data labelled with a corresponding at least one characteristic. Such training data may comprise public datasets, custom datasets (e.g., manually labelled images suitable for the processing task at hand), or a mix thereof.

The output from the first algorithm may for example comprise at least one of: a motion measurement, an object count, object detections, object classifications, or image segments. The output may indicate such characteristic(s) for the entire input data as analysed by the first algorithm. In other embodiments, the output may indicate such characteristic(s) for portions of the input data as analysed by the first algorithm, such that each portion of the input data as analysed by the first algorithm is associated with at least one characteristic.

Each chip 106a-b further comprises one or more processing components. In figure 1, each chip 106a-b comprises 3 processing components 114, 116, 118, but this number is just by way of example. A processing component 114, 116, 118 may implement noise filtering functionality, such as temporal noise filtering functionality. A processing component 114, 116, 118 may implement object tracking functionality. A processing component 114, 116, 118 may implement artificial intelligence, for example implementing license plate identification, or Re-ID functionality for object tracking. A processing component 114, 116, 118 may implement encoding functionality, e.g., software or hardware solution used to compress the image data to reduce the file size for storage or transmission. The encoding functionality may for example encode video data into H.264, H.265, VP9, AV1, etc.

Each of the processing components 114, 116, 118 may be connected to a memory 112. The memory 112 may be used for storing temporary data during the processing of the image data using the processing components 114, 116, 118. Typically, comprehensive processing of image data into processed image data may entail intensive memory access. Frequent accesses to pixels in memory, essential for many types of image processing as exemplified above, lead to substantial bandwidth demands, thereby increasing the risk of bandwidth bottlenecks which may reduce throughput in the multi-chip image processing unit 104.

As described above, such bandwidth bottlenecks may be avoided or reduced by distributing processing of the first image data between the first 106a and the second 106b chip. Such distribution may be facilitated by analysing the at least one characteristic as outputted by the components 110a, 110b. For example, if such analysis shows that the estimated use of memory bandwidth for processing the first portion of the first image data in the first chip exceeds a memory bandwidth threshold, a sub-portion of the first portion of the first image data received by the first chip 106a may be transmitted to the second chip 106b for processing. Such transmission may be achieved using the inter-chip connection 108 between the first chip 106a and the second chip 106b, for example using the PCI-e interface. In some embodiments upon the estimated use of memory bandwidth exceeds the memory bandwidth threshold for both of the chips 106a-b, the distribution may be aborted for the first image data, and the first 106a and second chips 106b may continue to process the portions of the first image data as received through the connections 120a-b.

For example, processing components 114a-b may each comprise functionality for applying a temporal noise filter (TNF) to the first image data. The memory bandwidth needed for applying TNF may increase based on motion in the scene as captured by the first image data. In some examples, the at least one characteristic determined for the first portion of the first image data, received at the first chip 106a through the connection 120a, may indicate a first motion measurement/value. The at least one characteristic determined for the second portion of image data, received at the second chip 106b through the connection 120b, may indicate a second motion measurement/value. Upon the first motion measurement being higher than the second motion measurement, distribution of processing of the first image data between the first 106a and the second 106b chip using the inter-chip connection 108 may comprise transmitting a sub-set of the first portion of the image data from the first chip to the second chip using the inter-chip connection. In this way, the first chip 106a may process (apply TNF) a smaller part of the first image data compared to the second chip 106b, such that the estimated use of memory bandwidth is distributed evenly between the first 106a and the second 106b chip.

In another example, processing components 116a-b may each comprise functionality for tracking of objects in the first image data. The memory bandwidth needed for tracking of objects may increase based on the number of objects in the scene as captured by the first image data. In some examples, the at least one characteristic determined for the first portion of the first image data, received at the first chip 106a through the connection 120a, may indicate a first object count. The at least one characteristic determined for the second portion of image data, received at the second chip 106b through the connection 120b, may indicate a second object count. Upon the first object count is higher than the second object count, distribution of processing of the first image data between the first 106a and the second 106b chip using the inter-chip connection 108 comprises transmitting a sub-set of the first portion of the first image data from the first chip 106a to the second chip 106b using the inter-chip connection 108. In this way, the first chip 106a may process (perform object tracking on) a smaller part of the first image data compared to the second chip 106b, such that the estimated use of memory bandwidth is distributed evenly between the first 106a and the second 106b chip.

The distribution of processing may be implemented in a similar way in embodiments where the processing components 118a-b each comprise functionality for encoding the first image data. For example, in case the at least one characteristic (motion complexity/value, spatial complexity such as intricate details, textures, and sharp edges, etc.) determined the first image data indicates that encoding may require more memory bandwidth for the first portion of image data (received at the first chip 106a through the connection 120a) compared to the memory bandwidth required for the second portion of image data (received at the first chip 106a through the connection 120a), parts of the first portion may be distributed to the second chip 106b for processing, such that the estimated use of memory bandwidth is distributed evenly between the first 106a and the second 106b chip.

The size of the image data transmitted from one chip to the other chip for processing may depend on how much the estimated bandwidth exceeds a bandwidth threshold, wherein the size increases with an increasing difference between the estimate and the threshold. The bandwidth threshold may correspond to the memory bandwidth available at the chip.

Estimation of bandwidth may be performed using for example by referring to benchmarks or lookup tables to estimate memory bandwidth needs for the current image, i.e., based on the characteristics outputted by the first algorithm. Data profiling strategies can be used to establish such benchmarks or lookup tables. For example, such data profiling strategies may involve:
- Establish benchmarks for each image processing type. For instance, investigate which memory bandwidth is required to process an image with X objects, Y motion magnitude, etc.
- Create a database or a lookup table associating image characteristics to memory bandwidth requirements based on these benchmarks.

In other embodiments, machine learning regression models may be trained on past data (image characteristic(s) labelled with memory bandwidth required to perform a certain image processing task) to estimate the memory bandwidth requirements based on the characteristics.

In some embodiments, a mathematical method may be built and used to estimate the memory bandwidth needed for certain image processing tasks. Using such mathematical models, it may be calculated how many pixels need to be loaded via the memory bus (and thus the required memory bandwidth) to complete the image processing task.

The estimation of the bandwidth may for example be implemented by a separate component (not shown in figure 1) in each of the chips 106a-b, by a component (not shown in figure 1) separate from the first 106a and second 106b chips, or by the component 110a-b implementing the first algorithm in the first 106a and second 106b chip.

Figure 2 shows a multi-chip image processing unit 104 similar to the one shown in figure 1. The multi-chip processing unit 104 is part of a system 200 for distributing load in the multi-chip image processing unit 104.

The first chip 106a of the multi-chip image processing unit 104 comprises an extra component 202, used to form an encoded image 204. In some embodiments, the processing of the first image data into processed image data comprises encoding of the first image data, e.g., using the processing components 118a-b. Since processing of the first image has been distributed as described above, e.g., by distributing processing of a subset of the first image data to the first chip 106a and distributing the remainder of the first image data to the second chip 106b, the processing component 118a of the first chip 106a is encoding a subset of the first image data of into first encoded data, and the processing component 118b of the second chip 106b is encoding the remainder of the first image data of into second encoded data.

In newer encoding methods, e.g., Advanced Video Coding (AVC) (also called H.264) and High Efficiency Video Coding (HEVC) (also called H.265), the concept of tiles (only supported by HEVC encoding) and slices has been introduced. Tiles and slices allow for the image to be divided into a grid of rectangular regions that can be independently decoded/encoded. To be independently codable, there shall not be any predictions using pixels from more than one slice or tile, and the results from the prediction shall only be used in the same slice or tile. This concept may be used for parallel processing purposes. This concept may also be used as described herein for achieving a single encoded image from portions of encoded image data separately encoded by encoders of the first 106a and second 106b chip. Put differently, image data encoded by a plurality of encoders can be stitched into one encoded image.

In figure 2, the functionality for forming the encoded image is implemented in the first chip 106a, in a stitching component 202. For that reason, the second chip 106b is transmitting the second encoded data to the first chip 106a using the inter-chip connection 108. The first chip may then output the encoded image 204. In other embodiments, the stitching/multiplexing functionality may be implemented in the second chip 106b, or in a unit separate from the first 106a and second 106b chip.

In figures 1-2, the multi-chip image processing unit 104 comprises two chips 106a-b. This is just by way of example, for ease of description of the techniques for distributing the estimated use of memory bandwidth evenly between the first and the second chip. Figure 3 shows by way of example a multi-chip image processing unit 304 comprising three chips 106a-c. In this embodiment, the three chips 106a-c are connected to each other using three separate inter-chip connection 308a-c. As such, image data to be processed may be distributed from one of the chips 106a-c to both other chips 106a-c. The multi-chip processing unit 304 is part of a system 300 for distributing load in a multi-chip image processing unit.

Figure 4-6 show different embodiments of cameras with sensors connected to multi-chip image processing units.

In some embodiments a chip in the multi-chip image processing unit is connected to a single sensor. In some embodiments, a chip of the multi-chip image processing unit is connected to more than one sensor.

In some embodiments, more than one chip in the multi-chip image processing unit is connected to a same sensor.

In some embodiment, there is a 1-1 relationship between the connection between a sensor and a chip. In this embodiment, for each sensor, there is exactly one dedicated chip connected to it, and similarly, for each chip, there is exactly one sensor connected to it.

Figure 4 shows by way of example a system 400 comprising a multi-view camera 202 and a multi-chip image processing unit 104. The multi-view camera 202 in figure 4 comprises two sensors 102a-b, capturing a scene from two directions. In other embodiments, the multi-view camera 202 may comprise 3 or more sensors. The first sensor 102a is connected to a first chip 106a in the multi-chip processing unit 104. The second sensor 102b is connected to a second chip 106b in the multi-chip processing unit 104. The multi-chip processing unit may for example include components as described above in conjunction with figure 1-2. When capturing image data by the multi-view camera 202, the analysing of such image data using the first algorithm implemented in the multi-chip image processing unit 104 comprises analysing a first portion of the image data using the first chip 106a and analysing a second, separate, portion of the image data using the second chip 106b. The first portion of the image data is in this embodiment captured by the first sensor 106a and the second portion of the image data is captured by the second sensor 106b. The first portion and the second portion may have a same size, e.g., if the sensors 106a-b have a same resolution.

Figure 5 shows by way of example a system 500 comprising a panorama view camera 302 and a multi-chip image processing unit 104. The panorama view camera 302 in figure 5 comprises four sensors 102a-d, capturing a scene as a panoramic image. The panorama view camera 302 may in other embodiments comprise three sensors, or more than four sensors. **In** figure 5, the two upper sensors 102a-b are connected to a first chip 106a in the multi-chip processing unit 104. The two lower sensors 102c-d are connected to a second chip 106a in the multi-chip processing unit 104. The multi-chip processing unit may for example include components as described above in conjunction with figure 1-2. When capturing image data by the panorama view camera 302, the analysing of such image data using the first algorithm implemented in the multi-chip image processing unit 104 comprises analysing a first portion of the image data using the first chip 106a and analysing a second, separate, portion of the image data using the second chip 106b. The first portion of the image data is in this embodiment captured by the two upper sensors 106a-b and the second portion of the image data is captured by the two lower sensors 106c-d.

Figure 6 shows by way of example a system 600 comprising a single view camera 402 and a multi-chip image processing unit 104. The single view camera 402 in figure 5 comprises a single sensor 102a, capturing a scene. The single sensor 102a is connected to a first chip 106a and a second chip 106b in the multi-chip processing unit 104. The multi-chip processing unit may for example include components as described above in conjunction with figure 1-2. When capturing image data by the single view camera 402, the analysing of such image data using the first algorithm implemented in the multi-chip image processing unit 104 comprises analysing a first portion of the image data using the first chip 106a and analysing a second, separate, portion of the image data using the second chip 106b. In this embodiment, the first and second chip thus work in tandem to analyse the image data captured by the sensor 102a, and each analyse a separate portion of the image data captured by the sensor 102a.

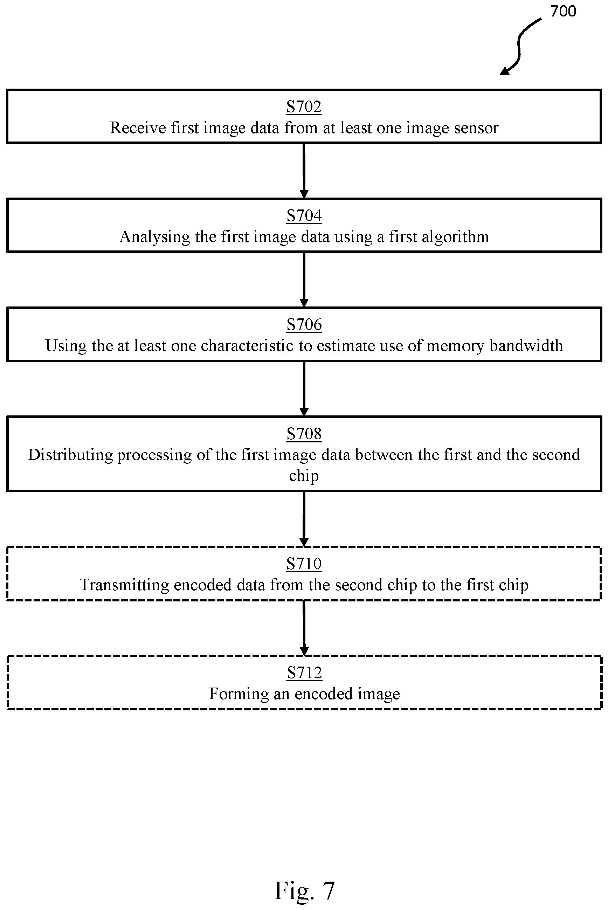

Figure 7 shows by way of example a flow chart of a method 700 of distributing load in a multi-chip image processing unit.

The method 700 comprises the step of receiving S702, at a multi-chip image processing unit, first image data from at least one image sensor. The image data may for example be received as raw readings from the at least one image sensor, as a full colour image (i.e., demosaiced) and/or post processed (e.g., white balance, contrast, sharpness, or other adjustments applied) dependent on the implementation.

The method 700 further comprises analysing S704 the first image data using a first algorithm. As mentioned above, the analysing is performed by the plurality of chips of the multi-chip image processing unit. In a non-claimed example, the analysing may be performed by a component separate from the multi-chip image processing unit. In any case, the first algorithm, being content-agnostic, performs a set number of operations for a given size of image data input to the first algorithm, and outputs at least one characteristic of the first image data.

The method further comprises using the at least one characteristic to estimate S706 use of memory bandwidth in the first and second chip when processing the first image data into processed image data using the multi-chip image processing unit. Based on the estimation, the processing of the first image data is distributed S708 between the first and the second chip using the inter-chip connection such that the estimated use of memory bandwidth is distributed evenly between the first and the second chip.

In some embodiments, wherein the processing comprises encoding of the first image data in a format supporting slices and/or tiles, the method may further comprise transmitting S710 encoded data from chips in the multi-chip image processing unit to a dedicated chip of multi-chip image processing unit which has the functionality of forming S712 an encoded image. The encoded image thus comprises data encoded by that dedicated chip as well as encoded data received from the other chip(s) of the multi-chip image processing unit, such that each separately encoded data (encoded separately by the different chips) forms separate tiles or slices in the formed S712 encoded image.

The method 700 and other embodiments of the functionality described herein may be implemented as instructions stored by one or more non-transitory computer-readable media executable by one or more processors. Generally, the device implementing the systems 100, 200, 300, 400, 500, 600 may comprise circuitry which is configured to implement the components of the systems 100, 200, 300, 400, 500, 600 and, more specifically, their functionality. The described features in the systems 100, 200, 300, 400, 500, 600 can be implemented advantageously in one or more computer programs that are executable on a programmable system including at least one programmable processor. Suitable processors for the execution of a program of instructions include, by way of example, both general and special purpose microprocessors, and the sole processor or one of multiple processors or cores, of any kind of computer. The processors can be supplemented by, or incorporated in, ASICs (application-specific integrated circuits).

The above embodiments are to be understood as illustrative examples of the invention. Further embodiments of the invention are envisaged. For example, the first algorithm may comprise a plurality of algorithms, such as a HOG algorithm in combination with a machine learning classifier (e.g., a support vector machine) to analyse the HOG features outputted from the HOG algorithm. It should be noted that the first algorithm may comprise any type and number of content-agnostic algorithms. It is to be understood that any feature described in relation to any one embodiment may be used alone, or in combination with other features described, and may also be used in combination with one or more features of any other of the embodiments, or any combination of any other of the embodiments. Furthermore, equivalents and modifications not described above may also be employed without departing from the scope of the invention, which is defined in the accompanying claims.

## Claims

1. A method (700) of distributing load in a multi-chip image processing unit (104, 304) for processing image data into processed image data, the multi-chip image processing unit comprising a first chip (106a) and a second chip (106b) connected to each other via an inter-chip connection (108, 308a) , each of the first and second chip configured to process image data into processed image data and comprising a memory (112a, 112b) used during the processing of image data into processed image data, wherein the multi-chip image processing unit is configured to receive (S702) first image data from at least one image sensor (102a-d), the method comprising the steps of:
analysing (S704) the first image data using a first algorithm, the first algorithm performing a set number of operations for a given size of image data input to the first algorithm, wherein the first algorithm outputs at least one characteristic of the first image data;
using the at least one characteristic to estimate (S706) use of memory bandwidth in the first and second chip when processing the first image data into processed image data using the multi-chip image processing unit;
distributing (S708) processing of the first image data between the first and the second chip using the inter-chip connection such that the estimated use of memory bandwidth is distributed evenly between the first and the second chip;
wherein the first algorithm is implemented in each of the first and second chip, wherein the step of analysing the first image data using the first algorithm comprises analysing a first portion of the first image data using the first chip and analysing a second, separate, portion of the first image data using the second chip,
wherein the at least one sensor comprises a first sensor and a second sensor, wherein the first portion of the first image data is captured by the first sensor and wherein the second portion of the first image data is captured by the second sensor.

2. The method of claim 1, wherein the first portion and the second portion have a same size.

3. The method of any one of claims 1-2, wherein the first algorithm comprises at least one of: a convolutional neural network, CNN, a histogram of oriented gradients, HOG, algorithm, a local binary pattern, LBP, algorithm, or a Haar Cascade algorithm.

4. The method of any one of claims 1-3, wherein the at least one characteristic comprises at least one of: a motion measurement, an object count, object detections, object classifications, or image segments.

5. The method of any one of claims 1-4, wherein the processing of the first image data into processed image data comprises at least one of: applying a temporal noise filter to the first image data, tracking of objects in the first image data, or encoding of the first image data.

6. The method of claim 5, wherein the processing of the first image data into processed image data comprises encoding of the first image data, wherein the step of distributing processing of the first image data between the first and the second chip comprises distributing processing of a subset of the first image data to the first chip and distributing the remainder of the first image data to the second chip, wherein the method further comprises:
encoding, by the first chip, the subset of the first image data of into first encoded data;
encoding, by the second chip, the remainder of the first image data of into second encoded data;
forming (S712) an encoded image (204), the encoded image comprising the first encoded data as a first tile or a first slice and the second encoded data as a second tile or a second slice.

7. The method of claim 6, wherein the step of forming the encoded image is implemented in the first chip, wherein the method further comprises:
transmitting (S710), by the second chip, the second encoded data to the first chip using the inter-chip connection.

8. The method of any one of claims 2-4, wherein the processing of the first image data into processed image data comprises applying a temporal noise filter to the first image data, wherein the at least one characteristic determined for the first portion of the first image data indicates a first motion measurement, wherein the at least one characteristic determined for the second portion of the first image data indicates a second motion measurement, and wherein upon the first motion measurement being higher than the second motion measurement, the step of distributing processing of the first image data between the first and the second chip using the inter-chip connection comprises transmitting a sub-set of the first portion of the image data from the first chip to the second chip using the inter-chip connection.

9. The method of any one of claims 1-2, wherein the processing of image data into processed image data comprises tracking of objects in the first image data, wherein the at least one characteristic determined for the first portion of the first image data indicates a first object count, wherein the at least one characteristic determined for the second portion of the first image data indicates a second object count, and wherein the first object count is higher than the second object count, wherein the step of distributing processing of the first image data between the first and the second chip using the inter-chip connection comprises transmitting a sub-set of the first portion of the first image data from the first chip to the second chip using the inter-chip connection.

10. A non-transitory computer-readable storage medium having stored thereon instructions for implementing the method according to any one of claims 1-10 when executed on a device having processing capabilities.

11. A system (100, 200, 300, 400, 500, 600) for distributing load in a multi-chip image processing unit (104, 304) for processing image data into processed image data, the multi-chip image processing unit comprising a first chip (106a) and a second chip (106b)connected to each other via an inter-chip connection (108, 308a), each of the first and second chip configured to process image data into processed image data and comprising a memory (112a, 112b) used during the processing of image data into processed image data, wherein the multi-chip image processing unit is configured to receive (S702) first image data from at least one image sensor (102a-d), the system comprising:
one or more processors; and
one or more non-transitory computer-readable media storing first computer executable instructions that, when executed by the one or more processors, cause the system to perform actions comprising:
analysing (S704) the first image data using a first algorithm, the first algorithm performing a set number of operations for a given size of image data input to the first algorithm, wherein the first algorithm outputs at least one characteristic of the first image data;
using the at least one characteristic to estimate (S706) use of memory bandwidth in the first and second chip when processing the first image data into processed image data using the multi-chip image processing unit;
distributing (S708) processing of the first image data between the first and the second chip using the inter-chip connection such that the estimated use of memory bandwidth is distributed evenly between the first and the second chip;
wherein the first algorithm is implemented in each of the first and second chip, wherein the step of analysing the first image data using the first algorithm comprises analysing a first portion of the first image data using the first chip and analysing a second, separate, portion of the first image data using the second chip,
wherein the at least one sensor comprises a first sensor and a second sensor, wherein the first portion of the first image data is captured by the first sensor and wherein the second portion of the first image data is captured by the second sensor.

12. The system of claim 13, implemented in one of: a single-view camera (402), a multi-view camera (202) or a panorama view camera (302), wherein the system comprises the at least one image sensor.

## Patentansprüche

1. Verfahren (700) zum Verteilen von Last in einer Mehrfachchip-Bildverarbeitungseinheit (104, 304) zum Verarbeiten von Bilddaten in verarbeitete Bilddaten, wobei die Mehrfachchip-Bildverarbeitungseinheit einen ersten Chip (106a) und einen zweiten Chip (106b) umfasst, die über eine Chip-zu-Chip-Verbindung (108, 308a) miteinander verbunden sind, wobei jeder von dem ersten und dem zweiten Chip dazu konfiguriert ist, Bilddaten in verarbeitete Bilddaten zu verarbeiten, und einen Speicher (112a, 112b) umfasst, der während der Verarbeitung von Bilddaten in verarbeitete Bilddaten verwendet wird, wobei die Mehrfachchip-Bildverarbeitungseinheit dazu konfiguriert ist, erste Bilddaten von mindestens einem Bildsensor (102a-d) zu empfangen (S702), wobei das Verfahren die folgenden Schritte umfasst:
Analysieren (S704) der ersten Bilddaten unter Verwendung eines ersten Algorithmus, wobei der erste Algorithmus eine festgelegte Anzahl von Operationen für eine gegebene Größe von Bilddaten, die in den ersten Algorithmus eingegeben werden, durchführt, wobei der erste Algorithmus mindestens eine Eigenschaft der ersten Bilddaten ausgibt;
Verwenden der mindestens einen Eigenschaft zum Schätzen (S706) einer Verwendung von Speicherbandbreite in dem ersten und dem zweiten Chip beim Verarbeiten der ersten Bilddaten in verarbeitete Bilddaten unter Verwendung der Mehrfachchip-Bildverarbeitungseinheit;
Verteilen (S708) der Verarbeitung der ersten Bilddaten zwischen dem ersten und dem zweiten Chip unter Verwendung der Chip-zu-Chip-Verbindung, so dass die geschätzte Verwendung von Speicherbandbreite gleichmäßig zwischen dem ersten und dem zweiten Chip verteilt wird;
wobei der erste Algorithmus in jedem von dem ersten und dem zweiten Chip implementiert wird, wobei der Schritt des Analysierens der ersten Bilddaten unter Verwendung des ersten Algorithmus Analysieren eines ersten Abschnitts der ersten Bilddaten unter Verwendung des ersten Chips und Analysieren eines zweiten, separaten, Abschnitts der ersten Bilddaten unter Verwendung des zweiten Chips umfasst,
wobei der mindestens eine Sensor einen ersten Sensor und einen zweiten Sensor umfasst, wobei der erste Abschnitt der ersten Bilddaten durch den ersten Sensor aufgenommen wird und wobei der zweite Abschnitt der ersten Bilddaten durch den zweiten Sensor aufgenommen wird.

2. Verfahren nach Anspruch 1, wobei der erste Abschnitt und der zweite Abschnitt dieselbe Größe aufweisen.

3. Verfahren nach einem der Ansprüche 1-2, wobei der erste Algorithmus mindestens eines der Folgenden umfasst: ein faltendes neuronales Netzwerk (convolutional neural network - CNN), einen HOG(histogram of oriented gradients - Histogramm orientierter Gradienten)-Algorithmus, einen LBP(local binary pattern - lokales Binärmuster)-Algorithmus oder einen Haar-Kaskaden-Algorithmus.

4. Verfahren nach einem der Ansprüche 1-3, wobei die mindestens eine Eigenschaft mindestens eines der Folgenden umfasst: einen Bewegungsmesswert, eine Objektzählung, Objektdetektionen, Objektklassifikationen oder Bildsegmente.

5. Verfahren nach einem der Ansprüche 1-4, wobei die Verarbeitung der ersten Bilddaten in verarbeitete Bilddaten mindestens eines der Folgenden umfasst: Anwenden eines temporären Rauschfilters auf die ersten Bilddaten, Verfolgen von Objekten in den ersten Bilddaten oder Codieren der ersten Bilddaten.

6. Verfahren nach Anspruch 5, wobei die Verarbeitung der ersten Bilddaten in verarbeitete Bilddaten Codieren der ersten Bilddaten umfasst, wobei der Schritt des Verteilens der Verarbeitung der ersten Bilddaten zwischen dem ersten und dem zweiten Chip Verteilen der Verarbeitung einer Teilmenge der ersten Bilddaten an den ersten Chip und Verteilen des Rests der ersten Bilddaten an den zweiten Chip umfasst, wobei das Verfahren ferner Folgendes umfasst:
Codieren, durch den ersten Chip, der Teilmenge der ersten Bilddaten in erste codierte Daten;
Codieren, durch den zweiten Chip, des Rests der ersten Bilddaten in zweite codierte Daten;
Bilden (S712) eines codierten Bildes (204), wobei das codierte Bild die ersten codierten Daten als eine erste Kachel oder ein erstes Slice und die zweiten codierten Daten als eine zweite Kachel oder ein zweites Slice umfasst.

7. Verfahren nach Anspruch 6, wobei der Schritt des Bildens des codierten Bildes in dem ersten Chip implementiert ist, wobei das Verfahren ferner Folgendes umfasst: Übertragen (S710), durch den zweiten Chip, der zweiten codierten Daten an den ersten Chip unter Verwendung der Chip-zu-Chip-Verbindung.

8. Verfahren nach einem der Ansprüche 2-4, wobei die Verarbeitung der ersten Bilddaten in verarbeitete Bilddaten Anwenden eines temporären Rauschfilters auf die ersten Bilddaten umfasst, wobei die mindestens eine Eigenschaft, die für den ersten Abschnitt der ersten Bilddaten bestimmt wird, einen ersten Bewegungsmesswert angibt, wobei die mindestens eine Eigenschaft, die für den zweiten Abschnitt der ersten Bilddaten bestimmt wird, einen zweiten Bewegungsmesswert angibt, und wobei, wenn der erste Bewegungsmesswert höher als der zweite Bewegungsmesswert ist, der Schritt des Verteilens der Verarbeitung der ersten Bilddaten zwischen dem ersten und dem zweiten Chip unter Verwendung der Chip-zu-Chip-Verbindung Übertragen einer Teilmenge des ersten Abschnitts der Bilddaten von dem ersten Chip an den zweiten Chip unter Verwendung der Chip-zu-Chip-Verbindung umfasst.

9. Verfahren nach einem der Ansprüche 1-2, wobei die Verarbeitung von Bilddaten in verarbeitete Bilddaten Verfolgen von Objekten in den ersten Bilddaten umfasst, wobei die mindestens eine Eigenschaft, die für den ersten Abschnitt der ersten Bilddaten bestimmt wird, eine erste Objektzählung angibt, wobei die mindestens eine Eigenschaft, die für den zweiten Abschnitt der ersten Bilddaten bestimmt wird, eine zweite Objektzählung angibt, und wobei die erste Objektzählung höher als die zweite Objektzählung ist, wobei der Schritt des Verteilens der Verarbeitung der ersten Bilddaten zwischen dem ersten und dem zweiten Chip unter Verwendung der Chip-zu-Chip-Verbindung Übertragen einer Teilmenge des ersten Abschnitts der ersten Bilddaten von dem ersten Chip an den zweiten Chip unter Verwendung der Chip-zu-Chip-Verbindung umfasst.

10. Nicht-transitorisches computerlesbares Speichermedium, auf dem Anweisungen zum Implementieren des Verfahrens gemäß einem der Ansprüche 1-10 gespeichert sind, wenn sie auf einer Vorrichtung mit Verarbeitungsfähigkeiten ausgeführt werden.

11. System (100, 200, 300, 400, 500, 600) zum Verteilen von Last in einer Mehrfachchip-Bildverarbeitungseinheit (104, 304) zum Verarbeiten von Bilddaten in verarbeitete Bilddaten, wobei die Mehrfachchip-Bildverarbeitungseinheit einen ersten Chip (106a) und einen zweiten Chip (106b), die über eine Chip-zu-Chip-Verbindung (108, 308a) miteinander verbunden sind, umfasst, wobei jeder von dem ersten und dem zweiten Chip dazu konfiguriert ist, Bilddaten in verarbeitete Bilddaten zu verarbeiten, und einen Speicher (112a, 112b) umfasst, der während der Verarbeitung von Bilddaten in verarbeitete Bilddaten verwendet wird, wobei die Mehrfachchip-Bildverarbeitungseinheit dazu konfiguriert ist, erste Bilddaten von mindestens einem Bildsensor (102a-d) zu empfangen (S702), wobei das System Folgendes umfasst:
einen oder mehrere Prozessoren; und
ein oder mehrere nicht-transitorische computerlesbare Medien, die erste computerausführbare Anweisungen speichern, die, wenn sie durch den einen oder die mehreren Prozessoren ausgeführt werden, bewirken, dass das System Vorgänge durchführt, die Folgendes umfassen:
Analysieren (S704) der ersten Bilddaten unter Verwendung eines ersten Algorithmus, wobei der erste Algorithmus eine festgelegte Anzahl von Operationen für eine gegebene Größe von Bilddaten, die in den ersten Algorithmus eingegeben werden, durchführt, wobei der erste Algorithmus mindestens eine Eigenschaft der ersten Bilddaten ausgibt;
Verwenden der mindestens einen Eigenschaft zum Schätzen (S706) der Verwendung von Speicherbandbreite in dem ersten und dem zweiten Chip beim Verarbeiten der ersten Bilddaten in verarbeitete Bilddaten unter Verwendung der Mehrfachchip-Bildverarbeitungseinheit;
Verteilen (S708) der Verarbeitung der ersten Bilddaten zwischen dem ersten und dem zweiten Chip unter Verwendung der Chip-zu-Chip-Verbindung, so dass die geschätzte Verwendung von Speicherbandbreite gleichmäßig zwischen dem ersten und dem zweiten Chip verteilt wird;
wobei der erste Algorithmus in jedem von dem ersten und dem zweiten Chip implementiert wird, wobei der Schritt des Analysierens der ersten Bilddaten unter Verwendung des ersten Algorithmus Analysieren eines ersten Abschnitts der ersten Bilddaten unter Verwendung des ersten Chips und Analysieren eines zweiten, separaten, Abschnitts der ersten Bilddaten unter Verwendung des zweiten Chips umfasst,
wobei der mindestens eine Sensor einen ersten Sensor und einen zweiten Sensor umfasst, wobei der erste Abschnitt der ersten Bilddaten durch den ersten Sensor aufgenommen wird und wobei der zweite Abschnitt der ersten Bilddaten durch den zweiten Sensor aufgenommen wird.

12. System nach Anspruch 13, in einer von Folgenden implementiert: einer Einzelkamera (402), einer Multiview-Kamera (202) oder einer Panoramakamera (302), wobei das System den mindestens einen Bildsensor umfasst.

## Revendications

1. Procédé (700) de répartition de charge dans une unité multipuce (104, 304) de traitement d'image pour traiter des données d'image en données d'image traitées, l'unité multipuce de traitement d'image comprenant une première puce (106a) et une seconde puce (106b) connectées l'une à l'autre via une connexion inter-puces (108, 308a), chacune des première et seconde puces étant configurée pour traiter des données d'image en données d'image traitées et comprenant une mémoire (112a, 112b) utilisée pendant le traitement des données d'image en données d'images traitées. l'unité multipuce de traitement d'image étant configurée pour recevoir (S702) des premières données d'image provenant d'au moins un capteur (102a-d) d'image, le procédé comprenant les étapes consistant à :
analyser (S704) les premières données d'image à l'aide d'un premier algorithme, le premier algorithme effectuant un nombre défini d'opérations pour une taille donnée de données d'image introduites dans le premier algorithme, le premier algorithme produisant au moins une caractéristique des premières données d'image ;
utiliser la ou les caractéristiques pour estimer (S706) l'utilisation de la largeur de bande de mémoire dans la première et la seconde puce lors du traitement des premières données d'image en données d'image traitées au moyen de l'unité multipuce de traitement d'image ;
répartir (S708) le traitement des premières données d'image entre la première et la seconde puce au moyen de la connexion inter-puces de telle sorte que l'utilisation estimée de la largeur de bande de mémoire soit répartie uniformément entre la première et la seconde puce ;
le premier algorithme étant mis en œuvre dans chacune des première et seconde puces, l'étape d'analyse des premières données d'image au moyen du premier algorithme comprenant l'analyse d'une première partie des premières données d'image au moyen de la première puce et l'analyse d'une seconde partie distincte des premières données d'image au moyen de la seconde puce,
le ou les capteurs comprenant un premier capteur et un second capteur, la première partie des premières données d'image étant capturée par le premier capteur et la seconde partie des premières données d'image étant capturée par le second capteur.

2. Procédé selon la revendication 1, la première partie et la seconde partie ayant la même taille.

3. Procédé selon l'une quelconque des revendications 1 à 2, le premier algorithme comprenant au moins un élément parmi : un réseau neuronal convolutif, CNN, un algorithme d'histogramme de gradients orientés, HOG, un algorithme à motif binaire local, LBP, ou un algorithme en cascade de Haar.

4. Procédé selon l'une quelconque des revendications 1 à 3, la ou les caractéristiques comprenant au moins un élément parmi : une mesure de mouvement, un comptage d'objets, des détections d'objets, des classifications d'objets ou des segments d'image.

5. Procédé selon l'une quelconque des revendications 1 à 4, le traitement des premières données d'image en données d'image traitées comprenant au moins un élément parmi : l'application d'un filtre de bruit temporel aux premières données d'image, le suivi d'objets dans les premières données d'image, ou le codage des premières données d'image.

6. Procédé selon la revendication 5, le traitement des premières données d'image en données d'image traitées comprenant le codage des premières données d'image, l'étape de répartition du traitement des premières données d'image entre la première et la seconde puce comprenant la distribution du traitement d'un sous-ensemble des premières données d'image à la première puce et la distribution du reste des premières données d'image à la seconde puce, le procédé comprenant en outre :
le codage, par la première puce, du sous-ensemble des premières données d'image en premières données codées ;
le codage, par la seconde puce, du reste des premières données d'image en secondes données codées ;
la formation (S712) d'une image codée (204), l'image codée comprenant les premières données codées en tant que premier pavé ou première tranche et les secondes données codées en tant que second pavé ou seconde tranche.

7. Procédé selon la revendication 6, l'étape de formation de l'image codée étant mise en œuvre dans la première puce, dans lequel le procédé comprenant en outre :
la transmission (S710), par la seconde puce, des secondes données codées à la première puce au moyen de la connexion inter-puces.

8. Procédé selon l'une quelconque des revendications 2 à 4, le traitement des premières données d'image en données d'image traitées comprenant l'application d'un filtre de bruit temporel aux premières données d'image, la ou les caractéristiques déterminées pour la première partie des premières données d'image indiquant une première mesure de mouvement, la ou les caractéristiques déterminées pour la seconde partie des premières données d'image indiquant une seconde mesure de mouvement, et lorsque la première mesure de mouvement est supérieure à la seconde mesure de mouvement, l'étape de répartition du traitement des premières données d'image entre la première et la seconde puce au moyen de la connexion inter-puces comprenant la transmission d'un sous-ensemble de la première partie des données d'image de la première puce à la seconde puce au moyen de la connexion inter-puces.

9. Procédé selon l'une quelconque des revendications 1 à 2, le traitement de données d'image en données d'image traitées comprenant le suivi d'objets dans les premières données d'image, la ou les caractéristiques déterminées pour la première partie des premières données d'image indiquant un premier comptage d'objets, la ou les caractéristiques déterminées pour la seconde partie des premières données d'image indiquant un second comptage d'objets, et le premier comptage d'objets étant supérieur au second comptage d'objets, l'étape de répartition du traitement des premières données d'image entre la première et la seconde puce à l'aide de la connexion inter-puces comprenant la transmission d'un sous-ensemble de la première partie des premières données d'image de la première puce à la seconde puce à l'aide de la connexion inter-puces.

10. Support de stockage non transitoire lisible par ordinateur sur lequel sont stockées des instructions pour mettre en œuvre le procédé selon l'une quelconque des revendications 1 à 10 lorsqu'il est exécuté sur un dispositif ayant des capacités de traitement.

11. Système (100, 200, 300, 400, 500, 600) de répartition de charge dans une unité multipuce (104, 304) de traitement d'image pour traiter des données d'image en données d'image traitées, l'unité multipuce de traitement d'image comprenant une première puce (106a) et une seconde puce (106b) connectées l'une à l'autre via une connexion inter-puces (108, 308a), chacune des première et seconde puces étant configurée pour traiter des données d'image en données d'image traitées et comprenant une mémoire (112a, 112b) utilisée pendant le traitement des données d'image en données d'image traitées. l'unité multipuce de traitement d'image étant configurée pour recevoir (S702) des premières données d'image provenant d'au moins un capteur (102a-d) d'image, le système comprenant :
un ou plusieurs processeurs ; et
un ou plusieurs supports non transitoires lisibles par ordinateur stockant des premières instructions exécutables par ordinateur qui, lorsqu'elles sont exécutées par le ou les processeurs, amènent le système à effectuer des actions comprenant celles consistant à :
analyser (S704) les premières données d'image à l'aide d'un premier algorithme, le premier algorithme effectuant un nombre défini d'opérations pour une taille donnée de données d'image introduites dans le premier algorithme, le premier algorithme produisant au moins une caractéristique des premières données d'image ;
utiliser la ou les caractéristiques pour estimer (S706) l'utilisation de la largeur de bande de mémoire dans la première et la seconde puce lors du traitement des premières données d'image en données d'image traitées au moyen de l'unité multipuce de traitement d'image ;
répartir (S708) le traitement des premières données d'image entre la première et la seconde puce au moyen de la connexion inter-puces de telle sorte que l'utilisation estimée de la largeur de bande de mémoire soit répartie uniformément entre la première et la seconde puce ;
le premier algorithme étant mis en œuvre dans chacune des première et seconde puces, l'étape d'analyse des premières données d'image au moyen du premier algorithme comprenant l'analyse d'une première partie des premières données d'image au moyen de la première puce et l'analyse d'une seconde partie distincte des premières données d'image au moyen de la seconde puce,
le ou les capteurs comprenant un premier capteur et un second capteur, la première partie des premières données d'image étant capturée par le premier capteur et la seconde partie des premières données d'image étant capturée par le second capteur.

12. Système selon la revendication 13, mis en œuvre dans l'un des éléments suivants : une caméra (402) à vue unique, une caméra (202) à vues multiples ou une caméra (302) à vue panoramique, le système comprenant le ou les capteurs d'image.
